# EUROPÄISCHE PATENTANMELDUNG

(11) **EP 2 146 092 A2**
(43) Veröffentlichungstag der Anmeldung: **20.01.2010**
(21) Anmeldenummer: 09009059.8
(22) Anmeldetag: 10.07.2009
(51) Int. Cl.: F03D 3/02, F03D 3/06

(54) **Windkraftanlage**

(30) Priorität: 17.07.2008 DE 102008033531
(71) Anmelder: Lehmkuhl, Andreas, 27777 Ganderkesee (DE)
(72) Erfinder: Lehmkuhl, Andreas, 27777 Ganderkesee (DE)
(74) Vertreter: Lasch, Hartmut

(57) **Zusammenfassung**

Eine Windkraftanlage besitzt eine um eine vertikale Drehachse drehbare Flügelanordnung, die zumindest einen Mittelflügel und zumindest einen Außenflügel umfasst. Der Mittelflügel besitzt einen Querschnitt mit zu der Drehachse radial äußeren Enden, wobei an zumindest einem äußeren Ende des Querschnitts des Mittelflügels ein seitlich hervorstehender Flansch ausgebildet ist.

## Beschreibung

Die Erfindung betrifft eine Windkraftanlage mit einer um eine vertikale Drehachse drehbaren Flügelanordnung, die zumindest einen Mittelflügel und zumindest einen Außenflügel umfasst, wobei der Mittelflügel einen Querschnitt mit zu der Drehachse radial äußeren Enden besitzt.

Neben den bekannten Windrädern, bei denen eine Flügelanordnung um eine im Wesentlichen horizontal verlaufende Drehachse drehbar ist, sind auch Windkraftanlagen der genannten Art bekannt, bei denen die Flügelanordnung um eine vertikale Achse dreht. Eine derartige Windkraftanlage weist in der Regel eine Bauhöhe von 2m bis 6m auf und ist insbesondere für die Erzeugung von elektrischem Strom bei Kleinverbrauchern, beispielsweise Privathäusern gedacht. Eine entsprechende Windkraftanlage ist beispielsweise in der WO 89/07713 A1 gezeigt.

Die in der WO 89/07713 A1 gezeigte Flügelanordnung umfasst einen zentrisch zur vertikalen Drehachse angeordneten Mittelflügel und zwei Außenflügel, die punktsymmetrisch zur vertikalen Drehachse angeordnet sind und einen modifizierten tropfenförmigen Querschnitt nach Art eines Flugzeugflügels aufweisen. Der Mittelflügel und die beiden Außenflügel sind konstruktiv zu einer gemeinsam drehenden Flügelanordnung zusammengefasst, deren Drehbewegung mittels eines Generators in üblicher Weise in elektrischen Strom umgewandelt wird.

Bei nachlassendem Wind bzw. bei Windstille dreht die Flügelanordnung zunächst noch aufgrund der Massenträgheit weiter, bis sie irgendwann zum Stillstand kommt. Wenn der Wind dann wieder auffrischt, soll die Flügelanordnung alleine aufgrund der auftretenden Windkraft selbsttätig anlaufen. In der Praxis hat es sich jedoch gezeigt, dass das selbsttätige Anlaufen der Flügelanordnung bei bestimmten Drehstellungen nicht oder nur unzureichend funktioniert, so dass die Windkraftanlage eine zusätzliche Anlaufhilfe braucht, was konstruktiv aufwändig und nachteilig ist.

Der Erfindung liegt die Aufgabe zugrunde, eine Windkraftanlage der genannten Art zu schaffen, bei der ein Anlaufen der Flügelanordnung aus dem Stillstand bei auftretendem Wind zuverlässig gewährleistet ist.

Diese Aufgabe wird erfindungsgemäß durch eine Windkraftanlage mit den Merkmalen des Anspruchs 1 gelöst. Dabei ist vorgesehen, dass an zumindest einem äußeren Ende des Querschnitts des Mittelflügels ein seitlich hervorstehenden Flansch ausgebildet oder angeformt ist.

Die Erfindung geht von der Grundüberlegung aus, dass sich am Ende des Mittelflügels relativ große Windwirbel oder -turbulenzen bilden, die das Anströmen der für das selbsttätige Anlaufen der Flügelanordnung wesentlichen Außenflügel stören und behindern. Der an dem Ende des Querschnitts des Mittelflügels ausgebildete Flansch verringert die Wirbelbildung wesentlich, so dass ein günstiges Anströmverhalten des Windes an den Außenflügeln erreicht ist, wodurch das Anlaufverhalten der Windkraftanlage wesentlich verbessert ist. Vorzugsweise ist an beiden radial äußeren Enden des Querschnitts des Mittelflügels jeweils ein Flansch ausgebildet, der sich vorzugsweise über die gesamte Höhe des Mittelflügels erstreckt. Der Flansch kann plattenförmig oder plattenartig ausgebildet sein und erstreckt sich vorzugsweise unter einem spitzen Winkel zu der Verbindungslinie, die die vertikale Drehachse V und somit den Mittelpunkt des Querschnitts des Mittelflügels mit dem radial äußeren Ende des Mittelflügels verbindet.

Der Flansch ist so ausgerichtet, dass er vorzugsweise nur auf der der Drehrichtung der Flügelanordnung abgewandten Seite des Querschnitts des Mittelflügels, d.h. in Gegen-Drehrichtung hervorsteht.

Mit der angrenzenden Oberfläche des Mittelflügels bildet der Flansch im Querschnitt einen Winkel α, der im Bereich von 45° bis 35° und insbesondere im Bereich von 80° bis 110° liegt. Es hat sich als besonders vorteilhaft erwiesen, wenn der Winkel α ≥ 90° ist.

In einer möglichen Ausgestaltung der Erfindung kann vorgesehen sein, dass der Flansch mit dem Ende des Querschnitts des Mittelflügels eine Abwinkelung bildet, so dass der Querschnitt in diesem Bereich eine Kante besitzt. Hinsichtlich des Strömungsverhaltens des Windes entlang der Oberfläche des Mittelflügels ist jedoch vorzugsweise vorzusehen, dass der Flansch zumindest auf der in Drehrichtung der Flügelanordnung weisenden Seite glatt und stufenlos in die Oberfläche des Mittelflügels übergeht. Dies kann beispielsweise durch einen abgerundeten oder ausgerundeten Übergangsbereich erreicht werden.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: den grundsätzlichen Aufbau einer Flügelanord- nung einer Windkraftanlage in schematischer Aufsicht,
- Fig. 2: eine perspektivische Darstellung des Mittelflü- gels,
- Fig. 3: den Querschnitt am Ende des Mittelflügels mit dem Flansch,
- Fig. 4: eine Abwandlung der Ausgestaltung gemäß Fig. 3;
- Fig. 5: eine Weiterbildung der Ausgestaltung gemäß Fig. 3 und
- Fig. 6: eine Weiterbildung der Ausgestaltung gemäß Fig. 4.

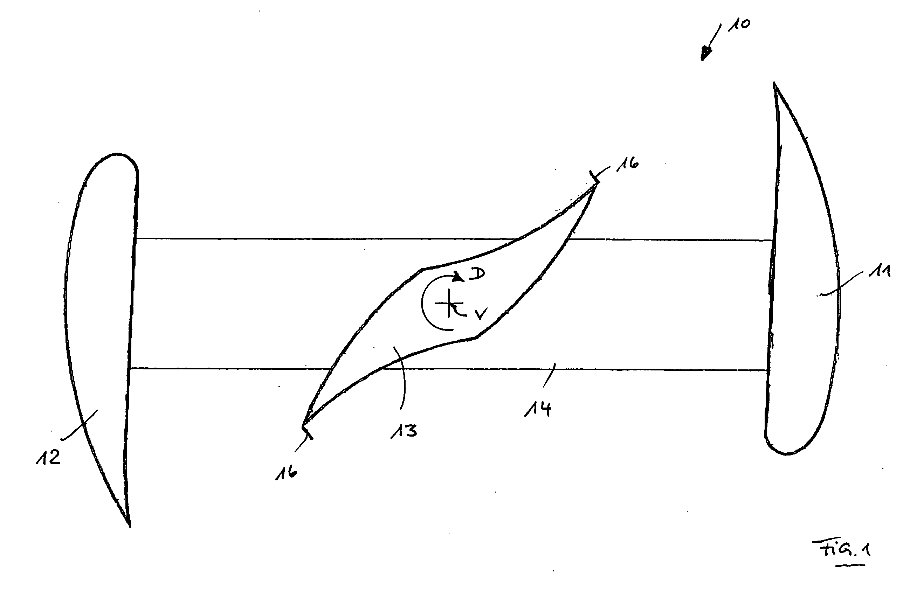

Figur 1 zeigt den grundsätzlichen Aufbau einer Windkraftanlage mit einer vertikalen Drehachse V, die senkrecht zur Zeichenebene verläuft. Die Windkraftanlage umfasst eine Flügelanordnung 10, die um die vertikale Drehachse V drehbar ist und zwei Außenflügel 11 und 12 aufweist, die auf entgegengesetzten Seiten mit Abstand zur Drehachse V angeordnet und bezüglich dieser punktsymmetrisch ausgebildet sind. Jeder Außenflügel 11 und 12 besitzt einen über seine Höhe konstanten Querschnitt nach Art eines modifizierten tropfenförmigen Profils ähnlich dem Querschnitts eines Flugzeugflügels. Die breiteren Querschnittsabschnitte der Außenflügel 11 und 12 weisen dabei in entgegengesetzte Horizontalrichtungen.

Zwischen den beiden Außenflügeln 11 und 12 ist ein Mittelflügel 13 angeordnet, der ebenfalls einen über seine Höhe konstanten Querschnitt besitzt und zentrisch zur Drehachse V angeordnet ist. Im dargestellten Ausführungsbeispiel ist der Mittelflügel 13 so ausgerichtet, dass seine längere Hauptachse unter einem Winkel von ca. 45° zu einer die Mittelpunkte der Querschnitte der Außenflügel 11 und 12 verbindenden Geraden ausgerichtet ist.

Der Mittelflügel 13 und die Außenflügel 11 und 12 sind auf ihrer Unterseite durch eine Tragkonstruktion beispielsweise in Form einer Bodenplatte 14 und auf ihrer Oberseite durch eine weitere Tragkonstruktion beispielsweise in Form einer (nicht dargestellten) Deckenplatte zu einer einstückigen Baueinheit verbunden, die als Einheit um die vertikale Drehachse V drehbar ist, wie es durch den Pfeil D in Figur 1 angedeutet ist.

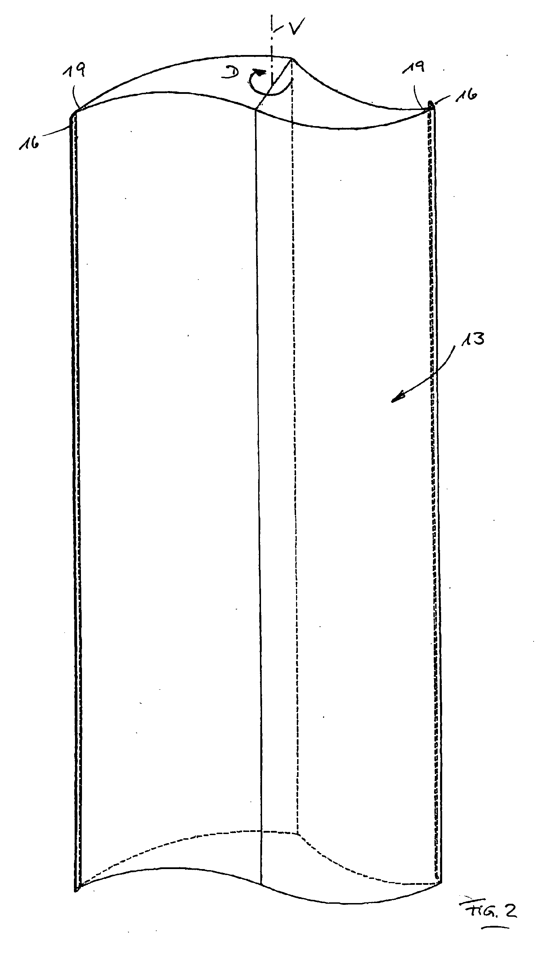

Die Figuren 1 und 2 zeigen den Querschnitt des Mittelflügels 13. Der Querschnitt des Mittelflügels 13 ist punktsymmetrisch zur vertikalen Drehachse V und verjüngt sich mit zunehmendem Abstand von der Drehachse V und läuft an seinen beiden radial äußeren Enden 19 jeweils spitz aus. An jedem radialen äußeren Ende 19 ist ein seitlich hervorstehender Flansch 16 angeformt, der sich gemäß Fig. 2 über die gesamte Höhe des Mittelflügels 13 erstreckt und über seine gesamte Höhe einen gleichbleibenden Querschnitt besitzt. Der Flansch 16 ist platten- oder leistenförmig ausgebildet und mit einer seiner Längsseiten am jeweiligen Ende 19 des Querschnitts des Mittelflügels 13 angebracht. Auf diese Weise ist erreicht, dass der Flansch 16 nur auf der der Drehrichtung D der Flügelanordnung 10 abgewandten Seite, d.h. in Gegen-Drehrichtung hervorsteht, wie es insbesondere aus Figur 1 ersichtlich ist.

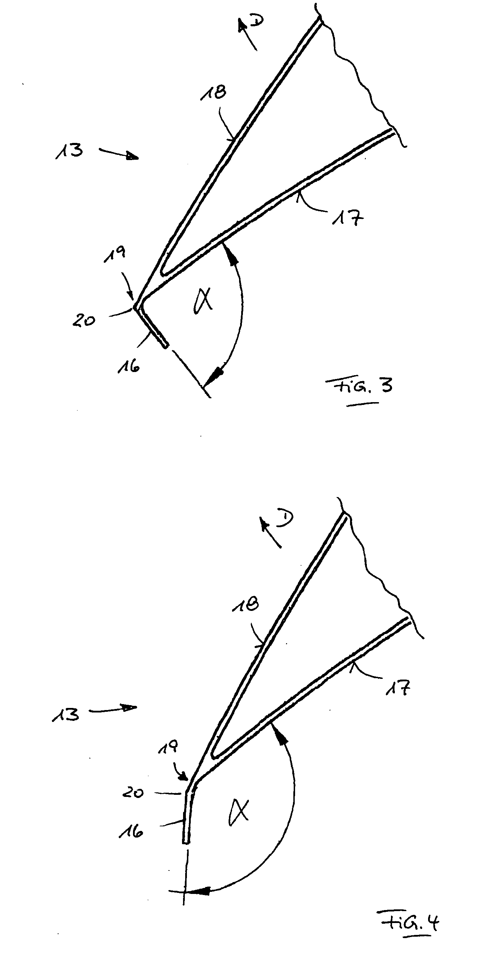

Wie Figur 3 zeigt, besitzt der Mittelflügel 13 eine in Drehrichtung D weisende Oberfläche 18 und eine der Drehrichtung D abgewandte Oberfläche 17, von der der Flansch 16 hervorsteht. Mit der der Drehrichtung D abgewandten Oberfläche 17 schließt der Flansch 16 einen Winkel α ein, der bei dem in Figur 3 dargestellten Ausführungsbeispiel 90° beträgt. Zwischen der in Drehrichtung D weisenden Oberfläche 18 und dem Flansch 16 ist am Ende des Querschnitts des Mittelflügels 13 eine Kante oder Abwinkelung 20 gebildet.

Die Ausgestaltung gemäß Figur 4 unterscheidet sich von der Ausgestaltung gemäß Figur 3 lediglich dadurch, dass der zwischen der der Drehrichtung D abgewandten Oberfläche 17 des Mittelflügels 13 und dem Flansch 16 gebildete Winkel auf ca. 135° vergrößert ist.

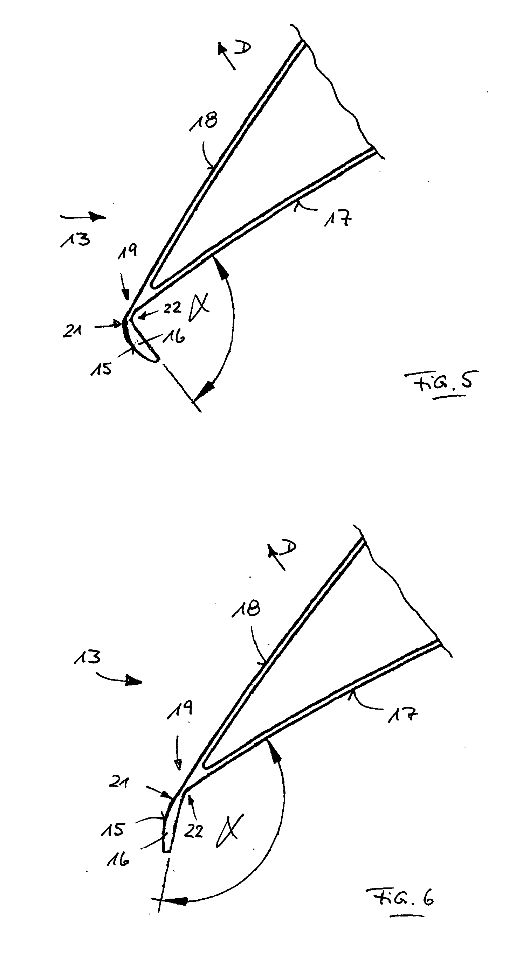

Das Ausführungsbeispiel gemäß Figur 5 unterscheidet sich vom Ausführungsbeispiel gemäß Figur 3 dadurch, dass der Flansch 16 auf seiner der Drehachse V abgewandten Außenseite konvex abgerundet ist und in stetiger Krümmung über einen konvexen Übergangsbereich 21 glatt und stufenlos in die in Drehrichtung weisende Oberfläche 18 des Mittelflügels übergeht. Auf seiner der Drehachse V zugewandten Innenseite ist der Flansch 16 im Wesentlichen eben und geht über einen konkav gekrümmten Übergangsbereich 22 in die der Drehrichtung D abgewandte Oberfläche 17 des Mittelflügels 13 über.

Das Ausführungsbeispiel gemäß Figur 6 unterscheidet sich von dem Ausführungsbeispiel gemäß Figur 5 wiederum nur dadurch, dass der Winkel α zwischen dem Flansch 16 und der der Drehrichtung D abgewandten Oberfläche 17 des Mittelflügels 13 auf 135° vergrößert ist.

## Patentansprüche

1. Windkraftanlage mit einer um eine vertikale Drehachse (V) drehbaren Flügelanordnung (10), die zumindest einen Mittelflügel (13) und zumindest einen Außenflügel (11, 12) umfasst, wobei der Mittelflügel (13) einen Querschnitt mit zu der Drehachse (V) radial äußeren Enden (19) besitzt, **dadurch gekennzeichnet, dass** an zumindest einem äußeren Ende (19) des Querschnitts des Mittelfügels (13) ein seitlich hervorstehender Flansch (16) ausgebildet ist.

2. Windkraftanlage nach Anspruch 1, **dadurch gekennzeichnet, dass** an beiden äußeren Enden (19) des Querschnitts des Mittelflügels (13) jeweils ein Flansch (16) ausgebildet ist.

3. Windkraftanlage nach Anspruch 1 oder 2, **dadurch gekennzeichnet, dass** der Flansch (16) sich über die gesamte Höhe des Mittelflügels (13) erstreckt.

4. Windkraftanlage nach einem der Ansprüche 1 bis 3, **dadurch gekennzeichnet, dass** der Flansch (16) plattenförmig ausgebildet ist.

5. Windkraftanlage nach einem der Ansprüche 1 bis 4, **dadurch gekennzeichnet, dass** der Flansch (16) nur in Gegenrichtung zur Drehrichtung (D) der Flügelanordnung (13) hervorsteht.

6. Windkraftanlage nach einem der Ansprüche 1 bis 5, **dadurch gekennzeichnet, dass** der Flansch (16) mit einer Oberfläche (17) des Mittelflügels (13) einen Winkel α im Bereich von 45° bis 135° bildet.

7. Windkraftanlage nach Anspruch 6, **dadurch gekennzeichnet, dass** der Winkel α im Bereich von 80° bis 110° liegt.

8. Windkraftanlage nach Anspruch 6 oder 7, **dadurch gekennzeichnet, dass** der Winkel α ≥ 90° ist.

9. Windkraftanlage nach einem der Ansprüche 1 bis 8, **dadurch gekennzeichnet, dass** der Flansch (16) mit dem Ende (19) des Querschnitts des Mittelflügels (13) eine Abwinkelung (20) bildet.

10. Windkraftanlage nach einem der Ansprüche 1 bis 8, **dadurch gekennzeichnet, dass** der Flansch (16) zumindest auf der in Drehrichtung (D) der Flügelanordnung (10) weisenden Seite glatt und stufenlos in die Oberfläche (18) des Mittelflügels (13) übergeht.
